# EUROPEAN PATENT SPECIFICATION

(11) **EP 0 482 951 B1**
(45) Date of publication and mention of the grant of the patent: **20.12.1995**
(21) Application number: 91309896.8
(22) Date of filing: 25.10.1991
(51) Int. Cl.: B60R 16/02

(54) **Method of and system for data communication in communication network on automobile**
Verfahren und System zur Datenübertragung in einem Kraftfahrzeug-Übertragungsnetz
Méthode et système pour la communication de données dans un réseau de communication d'une automobile

(30) Priority: 25.10.1990 JP 288214/90; 25.10.1990 JP 288216/90; 25.10.1990 JP 288217/90
(43) Date of publication of application: 29.04.1992
(73) Proprietor: PIONEER ELECTRONIC CORPORATION, Meguro-ku Tokyo-to (JP)
(72) Inventor: Shimotsuma, Hiroshi, c/o Pioneer Electronic Corp., Kawagoe-shi, Saitama-ken (JP); Gou, Yasunao, c/o Pioneer Electronic Corp., Kawagoe-shi, Saitama-ken (JP); Ikata, Yoshikatsu, c/o Pioneer Electronic Corp., Kawagoe-shi, Saitama-ken (JP); Kimura, Toshiyuki, c/o Pioneer Electronic Corp., Kawagoe-shi, Saitama-ken (JP)
(74) Representative: Brunner, Michael John

(56) References cited:
- EP-A- 0 216 372
- EP-A- 0 340 973
- EP-A- 0 365 435
- GB-A- 2 142 175
- US-A- 4 825 362

## Description

The present invention relates to a method of and a system for data communication in a communication network on an automobile, and more particularly to a method of and a system for data communication in a network of components of an audiovisual system on an automobile.

### Description of the Prior Art:

In recent years, automobile audio systems have been changing from systems which give a user only audio information such as music to systems which allow the user to enjoy both audio and visual information. Systems with both audio and visual capabilities are known as audiovisual systems.

Automobile audiovisual systems on automobiles are composed of many different audio and visual components. The audio components include a cassette tape deck, a radio tuner, a CD (compact disk) player, etc., while the visual components include a TV (television) tuner, a navigation system, etc.. Audio signals produced by some of these components are amplified by an amplifier and reproduced from loudspeakers in the automobile. Video signals produced by other components are displayed on a display unit in the automobile. Today, the audiovisual system components are controlled according to digital technology, i.e., by respective controllers in the form of microcomputers.

The components of an audiovisual system are required to be controlled systematically for systematic operation of the components. To meet this requirement, the controllers of the respective components are connected by a communication bus network, so that control data for the components will be transmitted through the communication bus.

In the conventional audiovisual system network, the controllers of the components are controlled by polling process. According to the polling process, either one of the controllers is given a priority status and handled as a master unit, with the other controllers as slave units, and when the master unit is to collect data from a slave unit, the master unit always accesses the slave unit, i.e., initiates the transfer of the data from the slave unit.

When the master unit transmits communication data to a slave unit for access or the slave unit transmits data back to the master unit, it is necessary that the controllers be identified or specified. For this purpose, the controllers are allotted respective addresses indicating themselves.

Heretofore, the controllers are allotted respective unique addresses. Control data which are to be given to controllers comprise address data peculiar to the respective controllers and instruction data (e.g., start command: ON data) added to the address data. The control data thus generated are sent to the communication bus.

One problem with the conventional network by which the controllers are connected is that communication data are transmitted and received by polling. More specifically, each time an ACC switch (car accessory power supply switch) assembled with an engine start keyswitch on an automobile is turned on or off, the audiovisual system on the automobile is also turned on or off. Therefore, the connection status of the slave units of the network has to be confirmed each time the ACC switch is turned on. According to the polling process, each time the ACC switch is turned on, the master unit has to access the individual slave units for confirming their connection, and hence is placed under a very large burden. For example, if each of the slave units has a 12-bit address, then the master unit has to access the slave units 4096 times at maximum provided the master unit confirms the connection of the slave units to the communication bus through its serial port.

In order for the master unit to access the slave units according to the polling process, it is necessary for the master unit to register the addresses of all the slave units connected to the communication bus. Any additional slave unit whose address has not been registered by the master unit cannot be accessed by the master unit even if the additional slave unit is physically or electrically connected to the communication bus. Therefore, to access the additional slave unit reliably, the additional slave unit should be allotted its own unique address, and that address should be newly registered by the master unit.

Actually, it is not sufficient for the master unit to confirm the connection of the slave units to the communication bus when the audiovisual system is turned on, for some of the slave units may be disconnected due to an internal failure or some other reason, or a new additional slave unit may be connected, while the audio-visual system is in operation.

The slave units transmit connection request information at different times. In order for the master unit to receive such different pieces of connection request information in timed relation thereto, the master unit needs many timers, which are however undesirable because of a possible resulting increase in the size and cost of the audiovisual system. The timers are set up using RAM, but the storage capacity of the RAM needs to be utilized as effectively as possible because the automobile audiovisual system should be small in size.

GB-A-2 142 175 discloses a system of the above prior art type in which the communication link is first determined by the master unit selecting and then setting up a connection to a slave unit. Data transmission from the slave unit does not occur until after the master unit has established the link. US-A-4 825 362 discloses a similar prior art system in which polling is carried out by the master unit, and EP-A-0 216 372 discloses a similar system.

It is an object of the present invention to provide a method of data communication in a communication network on an automobile, which method can reduce the burden on a master unit and improves the ability of an audio-visual system on the automobile to expand itself.

Another object of the present invention is to provide a system for data communication in a communication network on an automobile, which system allows a master unit to confirm the connection status of slave units in an audiovisual system on the automobile while the audiovisual system is in operation.

Still another object of the present invention is to provide a system for data communication in a communication network on an automobile, which system allows a master unit to establish times to receive connection request information from slave units in the communication network without employing many timers.

According to the present invention, there is provided a method of data communication in a communication network on an automobile, said communication network including a master unit and a plurality of slave units which are connected to a common communication bus, said master unit issuing connection status information to one slave unit about other slave units connected to the communication bus;
characterised in that
connection confirmation request information is first sent to said master unit from one of said slave units; and
thereafter, said master unit issues connection status information to said one slave unit about the other slave units connected to the communication bus.

The method preferably further comprises the step of periodically detecting whether connection request information is transmitted from the slave units thereby to confirm the connection status of the slave units at predetermined intervals of time while the communication network is being energized. The predetermined interval of time is preferably at least twice an interval of time at which the connection request information is transmitted from the slave units.

The present invention also includes a system for data communication in a communication network on an automobile, comprising:
a common communication bus for communicating information;
a master unit connected to said common communication bus; and
a plurality of slave units connected to said common communication bus, characterised in that
said slave units each include means for first sending connection confirmation request information to said master unit;
said master unit has means for receiving connection confirmation request information from one of the slave units to establish communication between said one slave unit and said master unit, and means for issuing to said one slave unit, in response thereto, connection status information about the other slave units connected to the communication bus.

The master unit preferably has means for periodically detecting whether connection request information is transmitted from the slave units thereby to confirm the connection status of the slave units at each of predetermined intervals of time while the communication network is being energized. Such predetermined interval of time is suitably at least twice an interval of time at which the connection request information is transmitted from the slave units.

The above and other objects, features and advantages of the present invention will become more apparent from the following description when taken in conjunction with the accompanying drawings in which preferred embodiments of the present invention are shown by way of illustrative example.

In the drawings:-
FIGS. 1A, 1B, and 1C are diagrams illustrative of the principles of the present invention, respectively.
FIG. 2 is a block diagram of a power supply circuit for an audiovisual system.
FIG. 3 is a block diagram of an audiovisual system.
FIG. 4 is a block diagram of a control network of the audiovisual system.
FIG. 5 is a block diagram of a specific arrangement in which a master unit and a slave unit are connected to each other.
FIG. 6 is a block diagram of another specific arrangement in which a master unit and a slave unit are connected to each other.
FIG. 7 is a diagram of a transfer format of communication data.
FIG. 8 is a diagram of major classification data.
FIG. 9 is a diagram of subclassification data.
FIG. 10 is a diagram of basic data formats.
FIG. 11 is a diagram showing physical addresses.
FIG. 12 is a diagram showing physical addresses.
FIG. 13 is a diagram showing logical addresses.
FIG. 14 is a diagram illustrative of an example in which physical and logical addresses are assigned.
FIG. 15A and 15B are flowcharts of a communication sequence when a power supply is turned on, respectively.
FIG. 16A and 16B are flowcharts of a communication sequence while the system is being energized by a power supply, respectively.
FIG. 17 is a diagram showing a manner in which information is transmitted in the system.
FIG. 18 is a timing chart showing a procedure by which the connection status of slave units is confirmed.
FIG. 19 is a diagram showing a communication process by way of an example.
FIG. 20 is a diagram of a master unit and an additlonal slave unit which is newly connected.

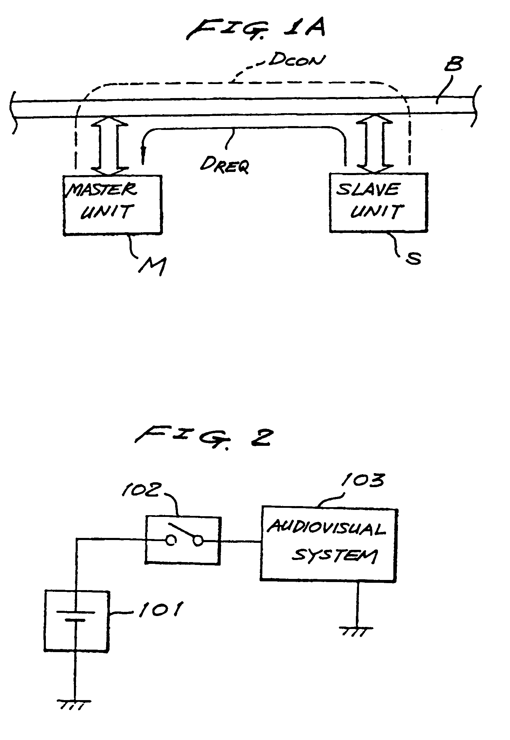

FIG. 1A shows the principles of the present invention. A master unit M and one or more slave units S are connected to a common communication bus B of a communication network on an automobile. After the master unit M has received information of a request for confirming a connection, i.e., connection confirmation Request information D_{REQ} from one of the slave units S, the master unit M issues connection status information D_{CON} relative to the other slave units S connected to the communication bus B, to the slave unit S which has transmitted the connection confirmation request information D_{REQ}.

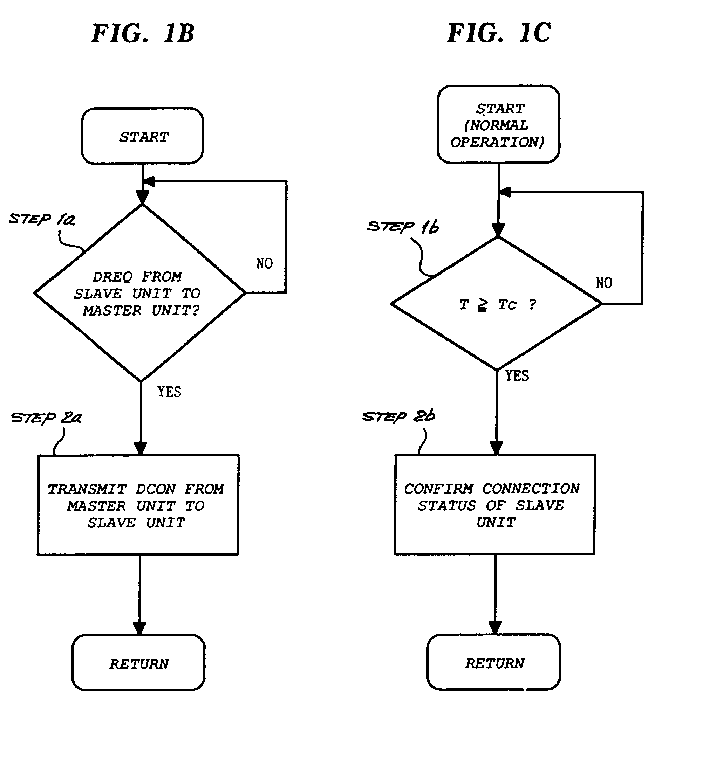

More specifically, as shown in FIG. 1B, if the master unit M has received connection confirmation request information D_{REQ} from one slave unit S in step 1a, then the master unit M issues connection status information DCON relative to the other slave units S connected to the communication bus B in step 2a, and does not positively access the slave units S. Stated otherwise, the master unit M provides necessary information after having waited for a self report to the master unit M at first, and the burden on the master unit M for accessing the slave units S is reduced. In addition, because the slave units S positively report to the master unit M, even if a new slave unit which has not been registered by the master unit M is additionally connected to the communication bus B, the new slave unit can function as a new member of the entire system after having sent a self report to the master unit M. In response to the connection confirmation request information D_{REQ} from one slave unit S, the master unit M issues connection status information D_{CON} with respect to the other slave units S connected to the communication bus B, to the slave unit S that has transmitted the connection confirmation request information D_{REQ}. Therefore, all the slave units S possess connection information of the communication bus B.

FIG. 1C also shows the principles of the present invention. Each of the slave units reports, or transmits, connection confirmation request information to the master unit. During normal operation in which the system is being energized by a power supply, the master unit has a means for periodically detecting, at each given interval of time T_{C} in step 1b, whether there is connection request information from a slave unit, for thereby confirming the connection status of the slave unit in step 2b. More specifically, the master unit detects whether connection confirmation request information is reported from each slave unit during normal operation in which the system is being energized by the power supply. Thus, the master unit can confirm the connection status of the slave units with respect to the communication bus. The connection status of a slave unit may represent, for example, disconnection of the slave unit from the communication bus, or connection of a new slave unit to the communication bus for participation in the system, which may be an audiovisual system.

According to the present invention, furthermore, each of the slave units reports, or transmits, connection confirmation request information to the master unit at each periodic interval of time. As shown in FIG. 1C, the master unit confirms the connection confirmation request information at an interval of time T_{C} which is at least twice the periodic interval of time at which the slave units transmit the connection confirmation request information, in step 1b. Since the interval of time T_{C} for confirming the connection confirmation request information from the slave units is at least twice the periodic interval of time at which the connection confirmation request information is transmitted from the slave units. Therefore, the connection confirmation request information necessarily comes in the time slot or interval T_{C}. The master unit is not required to establish times for receiving the connection confirmation request information in synchronism with the times at which the connection confirmation request information is transmitted from the slave units, which has been the case with the conventional arrangement. Specifically, the master unit only needs one timer.

### POWER SUPPLY OF AUDIOVISUAL SYSTEM

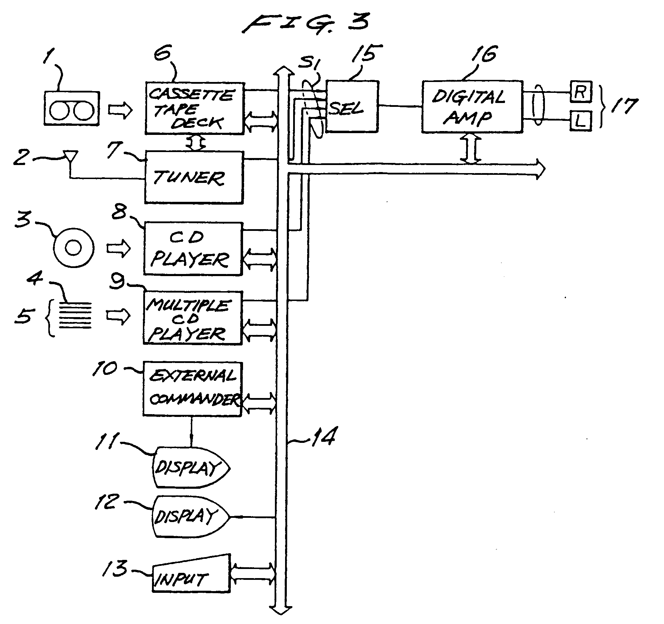

The principles of the present invention are particularly useful when embodied in an audiovisual (AV) system on an automobile. As shown in FIG. 2, the audiovisual system, denoted at 103, is supplied with electric energy from a battery 101 through an ACC switch 102. The ACC switch 102 is assembled with an engine start keyswitch of the automobile. When the engine key inserted in the engine start keyswitch is turned to the position of the ACC switch, the accessories on the automobile are energized by the battery 101. Therefore, the audiovisual system 103 is turned on or off each time the engine key is turned in the engine start keyswitch.

### ARRANGEMENT OF AUDIOVISUAL SYSTEM

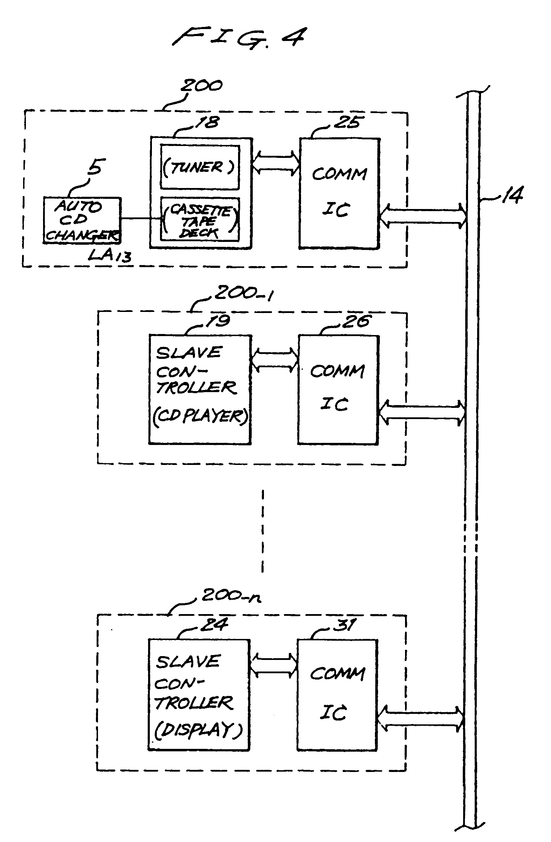

FIG. 3 shows a detailed systematic arrangement of the audiovisual system. The audiovisual system has audio reproducing components and visual reproducing components. The audio reproducing components include a cassette tape deck 6 for reproducing recorded audio signals from a cassette tape 1, a tuner 7 such as an AM/FM tuner for reproducing radio signals which are received by an antenna 2, a CD player 8 for reproducing recorded signals from a CD 3, and a multiple CD player 9 having an automatic CD changer 5 for reproducing recorded signals from multiple CDs 4. The visual reproducing components include a TV tuner contained in the tuner 7, for reproducing TV signals received by the antenna 2, and a display unit 12 for displaying images based on the TV signals and also displaying still images based on signals from the CD player 8 if a CD-ROM is played back by the CD player 8. Typically, a CD-ROM is employed by a navigation system. The audiovisual system has an external commander 10 which is in the form of a keyboard for entering various operation commands. A display unit 11 is connected to the external commander 10. The audiovisual system also has an input unit 13, which may be incorporated in the external commander 10.

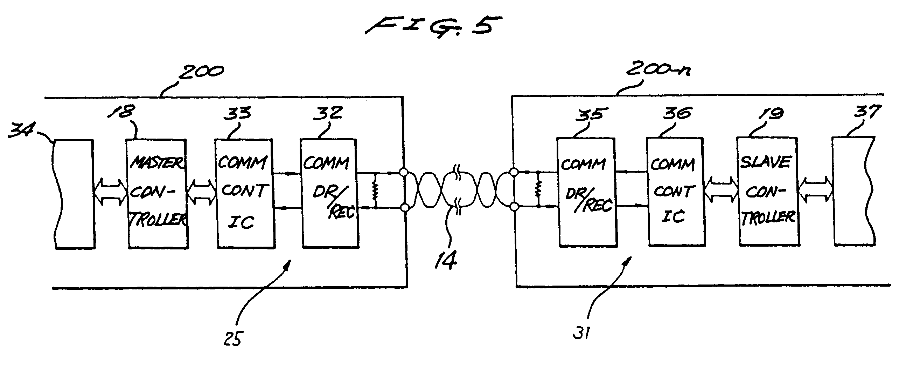

The above components of the audiovisual system have respective controllers for controlling their own operation. These controllers are connected to each other through a communication bus 14, thereby making up a communication bus control network. The control network is shown in FIG. 4, and will be described in detail later on.

Reproduced signals from the audio reproducing components are selectively applied through a selector 15 to a digital amplifier 16. After the reproduced signal has been amplified by the digital amplifier 16, it is applied to loudspeakers 17 from which reproduced sounds are output. The digital amplifier 16 contains a digital signal processing circuit which is controlled by a controller in the digital amplifier 16, the controller being connected to the communication bus 14.

### CONTROL NETWORK OF AUDIOVISUAL SYSTEM

FIG. 4 shows the control network in detail. For the purpose of description, the audiovisual system components connected to the communication bus 14 as shown in FIG. 3 will hereinafter be referred to as "units". As shown in FIG. 4, these units are connected to the communication bus 14 parallel to each other. Either one of these units is selected as a "master" unit, indicated by 200, for controlling the control network, while the other units serve as "slave" units, indicated by 200₋₁ ∼ 200₋ₙ.

The master unit 200 has a master controller 18 connected through a communication interface IC 25 to a communication bus 14. The master controller 18 includes controllers for controlling the cassette tape deck 6 and the tuner 7 as a controlled part 34 (FIG. 5). The controller for the cassette tape deck 6 also controls the automatic CD changer 5. The slave units 200₋₁ ∼ 200₋ₙ have respective slave controllers 19 ∼ 24, for controlling a controlled part 37 (FIG. 5), which are also connected to the communication bus 14 through respective communication interface ICs 26 ∼ 31.

FIG. 5 shows a specific arrangement in which the master unit 200 and the slave unit 200₋ₙ are connected to each other. The master unit 200 and the slave unit 200₋ₙ are connected to each other by the communication bus 14. The communication bus 14 comprises a twisted pair of conductors. Communication data DT transferred through the communication bus 14 is transmitted and received by the communication interface ICs 25, 31 of the master unit 200 and the slave unit 200₋ₙ, respectively. The communication interface IC 25 is divided into a communication driver/receiver 32 and a communication control IC 33. Likewise, the communication interface IC 31 is divided into a communication driver/receiver 35 and a communication control IC 36. Heretofore, the communication driver/receiver and the communication control IC have been integrally combined in one IC. The communication control IC 33 is composed of a CMOS transistor, while the communication driver/receiver 32 is composed of a bipolar transistor of high current-driven capability. The communication driver/receiver 35 and the communication control IC 36 are of the same structures as the communication driver/receiver 32 and the communication control IC 33.

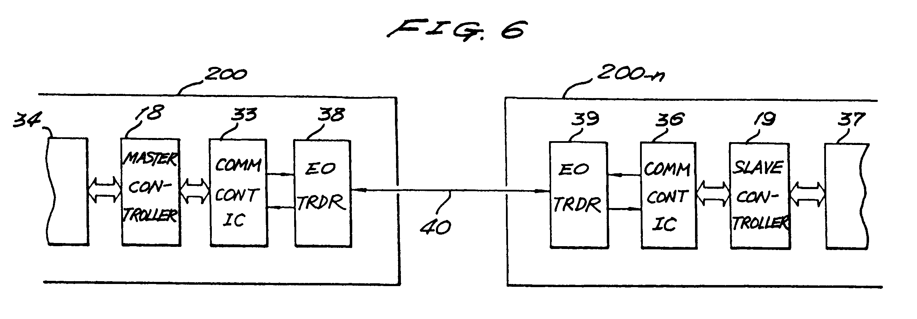

The communication interface IC 25, for example, which is divided into the communication control IC 33 and the communication driver/receiver 32, is capable of coping with different transmission mediums for the communication bus 14. In FIG. 5, the communication bus 14 is composed of a twisted pair of conductors for differential transmission. If the communication bus 14 comprises an optical communication cable 40 as shown in FIG. 6, then the communication driver/receiver 32 shown in FIG. 5 may be replaced with an electro-optical transducer 38 with the communication control IC 33 remaining unchanged. Another advantage is that since the master unit 200 fails due primarily to disturbance noise entering from the communication bus 14, only the communication driver/receiver 32 will malfunction when an excessive signal is applied thereto from the communication bus 14, and replacing the malfunctioning communication driver/receiver 32 with a new one will restore the master unit 200. Consequently, the maintenance of the master unit 200 and also the slave unit 200₋ₙ is relatively easy to carry out. The easy maintenance is particularly advantageous with audiovisual systems on automobiles because the master and slave units are exposed to noise induced by the automobile engines.

Furthermore, the fabrication of bipolar transistors and CMOS transistors according to different processes is easier and less expensive than the fabrication of Bi-CMOS ICs.

While only the communication interface IC 25 has been described above, each of the communication interfaces 26 ∼ 31 of the other slave units 200₋₁ ∼ 200₋ₙ is also divided into a communication control IC and a communication driver/receiver.

### TRANSFER FORMAT OF COMMUNICATION DATA DT

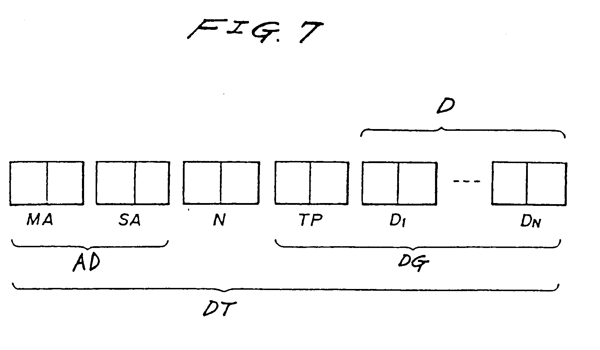

FIG. 7 shows a transfer format of the communication data DT comprising physical address data AD, message length data N and data group DG to be sent. As shown in FIG. 7, the communication data DT comprises, from its leading end, master address data MA indicating the address of the master unit 200, slave address data SA indicating the addresses of the slave units 200₋₁ ∼ 200₋ₙ, message length data N indicating the message length of data D, classification data TP indicating the type of the data D, and the data D itself which represents the contents to be transferred.

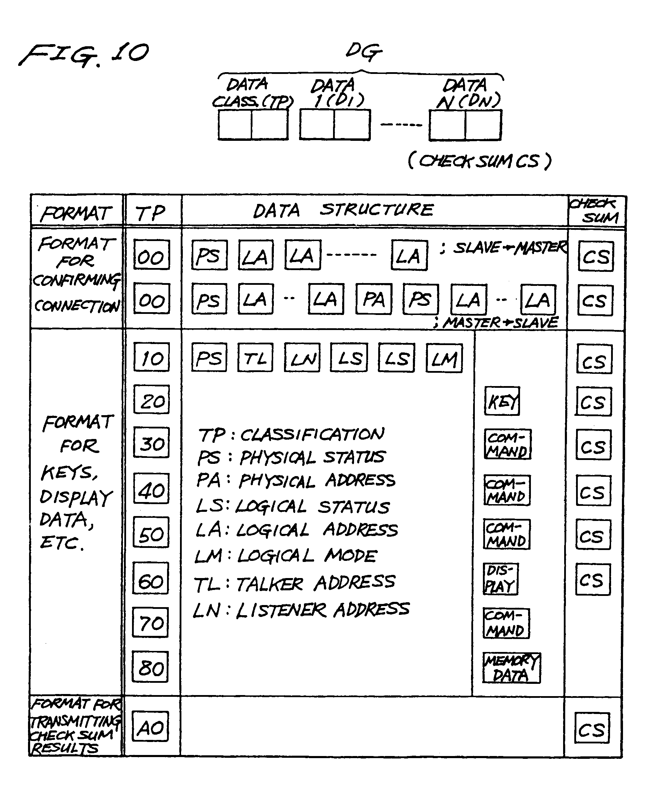

The arrangement of the data D varies depending on the contents of the communication data DT, i.e., the classification data TP. There are roughly three formats for the data D. As shown in FIG. 10, the first format is a format for confirming a connection, the second format is a format for keys and display data, and the third format is a format for transmitting the result of a check sum CS. The format for confirming a connection, which is used when the communication data DT is transferred from the slave units 200₋₁ ∼ 200₋ₙ to the master unit 200, differs from that which is used when the communication data DT is transferred from the master unit 200 to the slave units 200₋₁ ∼ 200₋ₙ. In the format for keys and display data as shown in FIG. 10, data ranging from physical status data PS for indicating status of each unit to logical mode data LM are all identical, and omitted from illustration.

Talker address data TL indicates the address of a transmitting side (talker) which transmits the communication data DT.

Listener address data LN indicates the address of a receiving side (listener) which receives the communication data DT.

Logical status data LS represents the status of the function corresponding to each logical address LA.

Logical mode data LM represents the operation status (mode) of the function corresponding to each logical address LA.

The check sum data CS is data for detecting an added error to improve the reliability of the data D.

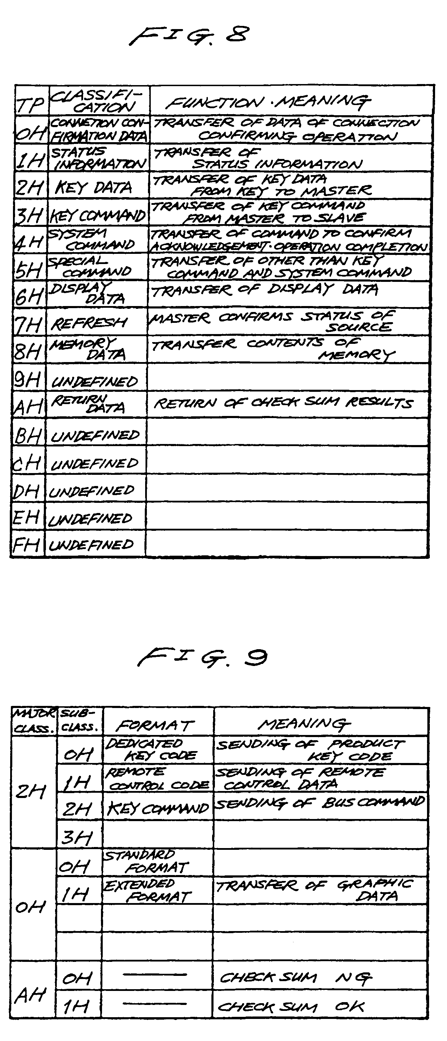

The classification data TP is positioned at the leading end of the communication data DT, and is a data area indicating the type of the data D following the classification data TP. The classification data TP is composed of major classification data and subclassification data. As shown in FIG. 8, the major classification data represents the type of the data D. If the entire classification data TP is of 8 bits, then the major classification data is allotted four high-order bits. As shown in FIG. 9, the subclassification data is mainly used to identify the format of the data D, and is allotted four low-order bits.

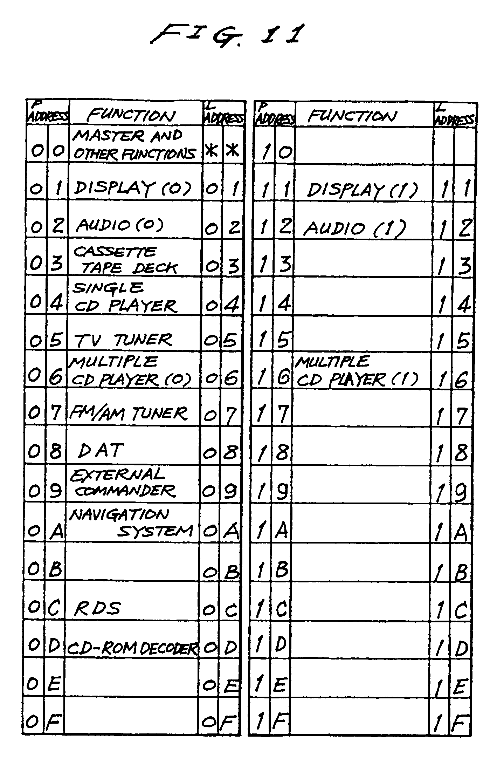

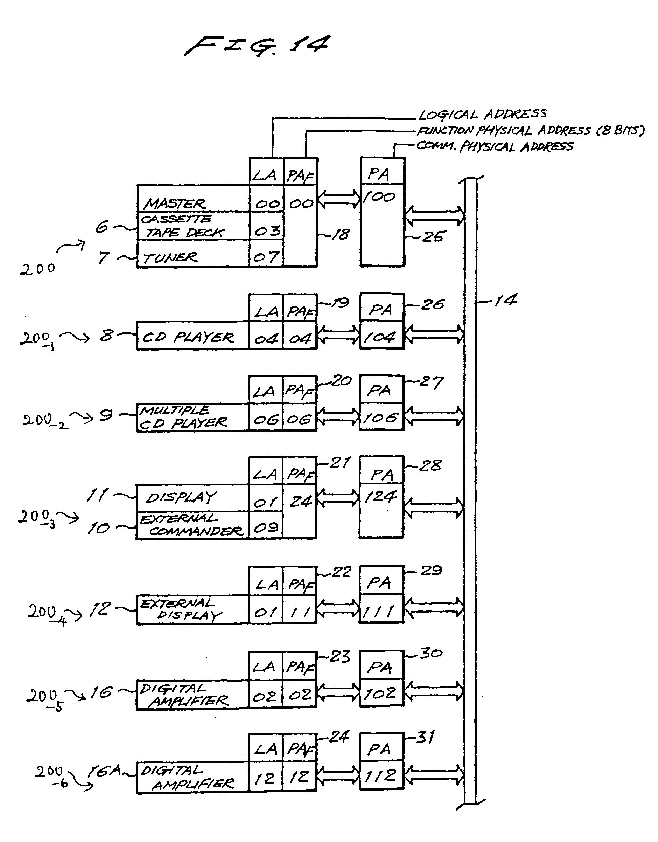

As illustrated in FIGS. 11 and 12, the physical address data PA represents communication addresses for specifying the communication interface ICs 25 ∼ 31 of the master unit 200 and the slave units 200₋₁ ∼ 200₋ₙ on the communication bus 14, the addresses indicating the master unit 200 and the slave units 200₋₁ ∼ 200₋ₙ. The physical address data PA for specifying the master unit 200 is fixed at all times. Basically, one unit is allotted one physical address data PA. FIG. 14 shows an example in which the units shown in FIG. 4 are allotted physical address data. In FIG. 14, the physical address data PA are established for the master and slave controllers 18 ∼ 24. This is to take into account the fact that two functional elements, such as the cassette tape deck 6 and the tuner 7, are connected to one master controller 18, as shown in the master unit 200. If one controller has only one function, then the physical address data PA and the logical address data LA indicate the same address, as shown in the slave controllers 19 ∼ 24.

The physical status data PS represents status information about the master unit 200 and the slave units 200₋₁ ∼ 200₋ₙ, and is data indicative of the number of function addresses (i.e., the logical address data LA, described below) that the units have.

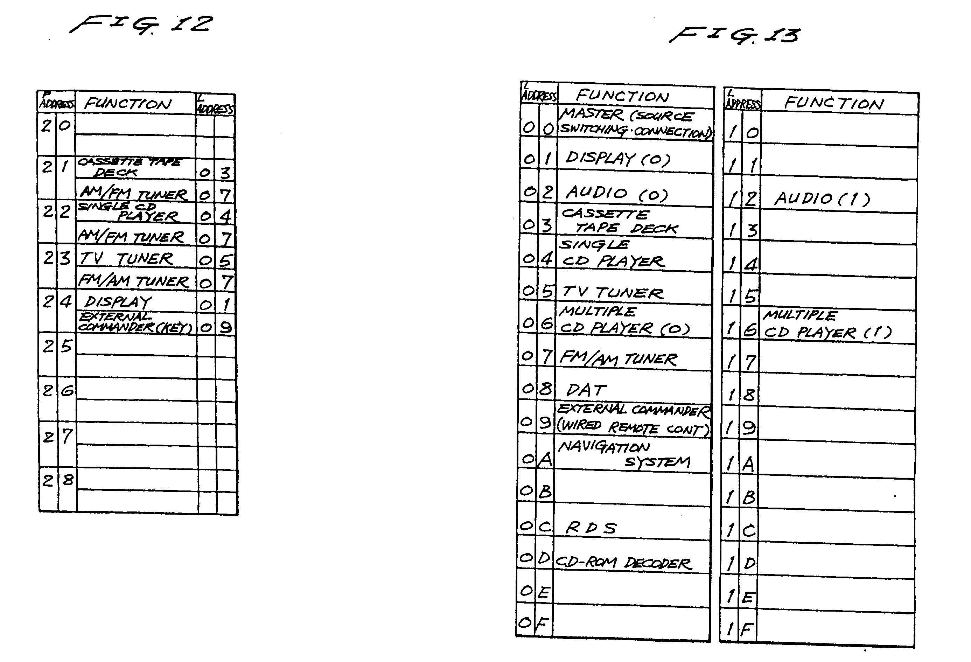

As shown in FIG. 13, the logical address data LA is data indicative of each of the functions (i.e., the tuner and the cassette tape deck) possessed by the master unit 200 and the slave units 200₋₁ ∼ 200₋ₙ. The logical address data LA is assigned to each function. The number of logical address data LA is not fixed because there are as many logical address data LA (e.g., LA₁, LA₂, ···) as there are functions possessed by the controller that is determined by the physical address data PA. FIG. 14 also shows the logical address data LA assigned to the units shown in FIG. 4.

In more detail, communication ICs 25 ∼ 31 have communication physical addresses PA. Each of the master and slave units 200, 200₋₁, ··· 200₋₆ has a function physical address PA_{F} and the logical address LA. The master controller 18 includes two controllers for controlling the cassette tape deck 6 and the tuner 7, and, therefore, two logical addresses LA are assigned to those two controllers. Similarly, a controller of the slave unit 200₋₃ includes a display controller and an external commander controller and, therefore, a logical address is assigned to each controller. In case that each of the controllers of the slave units as shown in the unit 200₋₁, 200₋₂, 200₋₄, 200₋₅, 200₋₆ except the unit 200-3, has only one function, the logical address is equal to the function physical address.

### COMMUNICATING OPERATION

Transmission of the communication data DT between the master unit 200 and the slave units 200₋₁ ∼ 200₋ₙ of the audiovisual system will be described below.

In this network, the slave units send a self report about themselves to the master unit, unlike the conventional polling process. The master unit does not initially positively access the slave units.

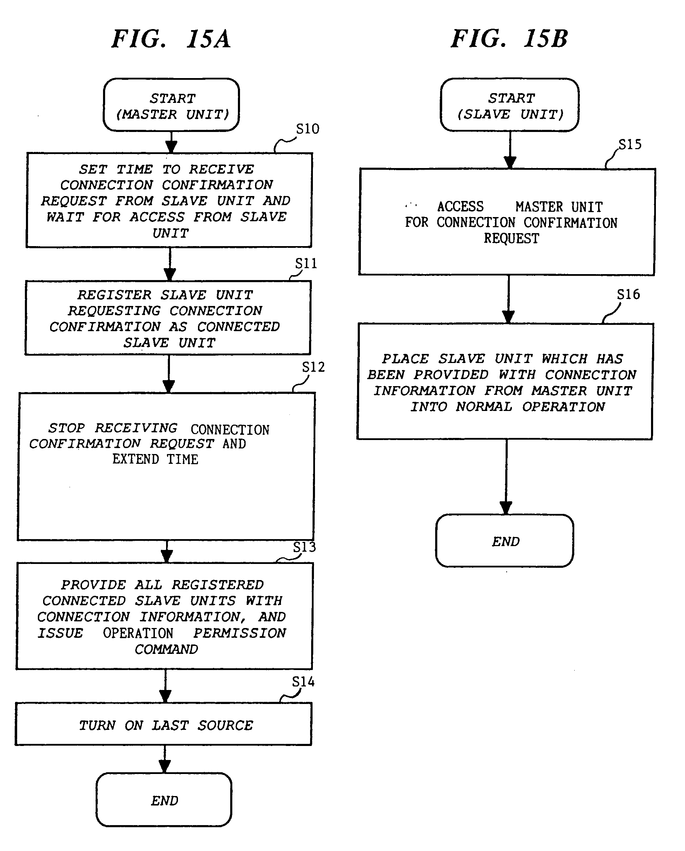

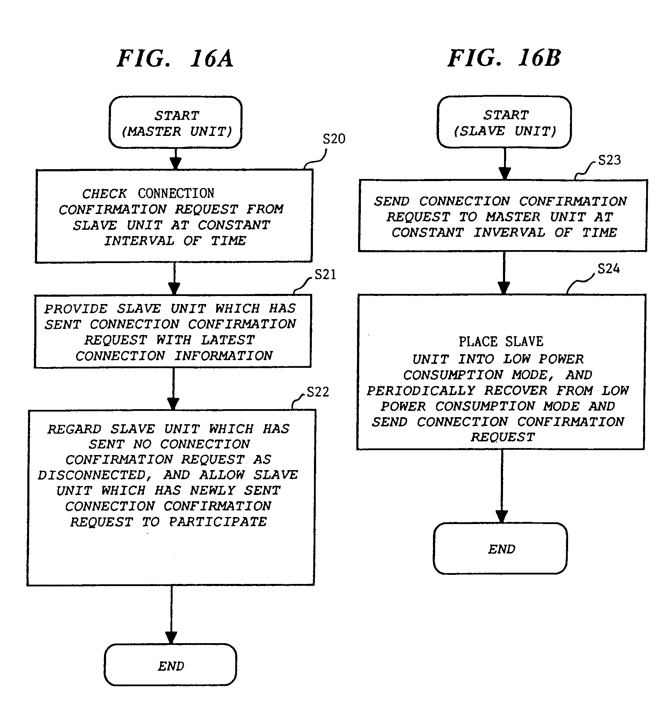

A sequence for confirming a connection is generally composed of a communication sequence SEQ₁ when the power supply is turned on (i.e., the ACC Switch is turned on ), and a communication sequence SEQ₂ while the audiovisual system is being energized by the power supply (i.e., during normal operation of the audiovisual system).
(1) The basic algorithm of the communication sequence SEQ₁ is as follows (for details, see FIGS. 15A and 15B):
   After the turning-on of the power supply has been detected, each slave unit accesses the master unit to request the confirmation of a connection. The master unit regards the slave units which have accessed the master unit, as connected slave units, and provides the slave units with information after elapse of a predetermined period of time. That is, in FIG. 15A, time for receiving connection confirmation request from the slave unit is set in the master unit to wait for access from the slave unit in step S10. The slave unit accesses the master unit for connection confirmation request in step S15. If the master unit does not exist, this operation is stopped after elapse of a predetermined period of time. Then, the master unit 200 registers the slave unit which has requested for connection confirmation as a connected slave unit in step S11. After elapse of a predetermined period of time, the master unit 200 stops receiving connection confirmation request from the slave unit when the ACC switch is on in step S12. At this time, when the slave unit having been confirmed as being connected before the ACC switch is off is not confirmed as being connected, the receiving time is extended. The master unit 200 provides all registered connected slave units with connection information and outputs operation permission command in step S13. Then, the process goes to step S14 in which the last source that is, the last component of the audiovisual system before the ACC switch is turned on, is turned on. Thereafter, the slave unit to which connection information has been given from the master unit 200 is placed into a normal operation in step S16.
(2) The communication sequence SEQ₂ while the audiovisual system is being energized by the power supply includes a processing sequence SEQ₃ to be carried out when the slave units 200₋₁ ∼ 200₋ₙ are disconnected, and a processing sequence SEQ₄ to be carried out when a new slave unit 200ₘ participates in the system. The basic algorithms of these processing sequences are as follows (for details, see FIGS. 16A and 16B):
   (2-1) The processing sequence SEQ₃
      Each slave unit sends a request for confirming a connection to the master unit at each interval of time. In response to the request, the master unit provides the latest connection information at all times. The master unit 200 regards any slave unit which has sent no request for confirming a connection, as being disconnected from the communication bus, performs necessary interval processing, and provides the other slave units with (latest) connection information which indicates the disconnected slave unit.
      That is, in step 20, the master unit 200 checks connection confirmation request from the slave unit at a constant interval of time, and the slave unit sends connection confirmation request to the master unit 20 at a constant interval of time in step 23. The master unit 200 provides the slave unit having sent connection confirmation request with the latest connection information in step S21. The master unit 200 regards the slave unit having sent no connection confirmation request as being disconnected and allow the slave unit having newly sent connection confirmation request to participate in the communication system in step S22.
      In this case, the master unit 200 positively provides connection information with all slave units. In case that no response is given to the slave unit, due to a communicat ion failure, although the slave unit sends connection confirmation request to the master unit 200, the slave unit is placed into low power consumption mode, and periodically recovered therefrom to a normal mode to send connection confirmation request to the master unit 200 in step S24.
   (2-2) The processing sequence SEQ₄
      When confirming a connection at the time the power supply is turned on, if a slave unit which has not been confirmed as being connected has suddenly transmitted a request for confirming a connection, then the master unit regards that new slave unit as participating in the system, performs necessary internal processing, and provides the other slave units with (latest) connection information which indicates the newly connected slave unit.

As described above, when the slave units access the master unit and send a request for confirming a connection to the master unit, the master unit provides information regarding the slave units connected to the communication bus, i.e., latest connection information. Since the latest connection information is given to all the slave units which have sent a request for confirming a connection, all those slave units have the same connection information.

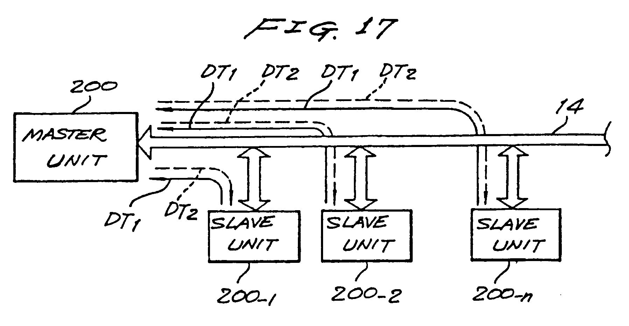

FIG. 17 specifically shows a manner in which information is transmitted in the system. When the slave unit 200₋₁ transmits connection confirmation request information DT₁ to the master unit M, the master unit 200 issues connection information DT₂ to the slave unit 200₋₁. Similarly, when the slave unit 200₋₂ transmits connection confirmation request information DT₁ to the master unit M, the master unit 200 issues connection information DT₂ to the slave unit 200₋₂. The same operation is effected with respect to all the slave units 200₋₁ ∼ 200₋ₙ. Therefore, all the slave units 200₋₁ ∼ 200₋ₙ share the same connection information DT₂. Stated otherwise, all the slave units 200₋₁ ∼ 200₋ₙ connected to the communication bus 14 recognize the components (or functions) of the audiovisual system. As a result, the slave units 200₋₁ ∼ 200₋ₙ are not only related to the master unit 200 in one to one correspondence, but also capable of direct communication with each other. Even if the master unit 200 fails for some reason, therefore, either one of the slave units 200₋₁ ∼ 200₋ₙ can be used as a substitute for the master unit 200.

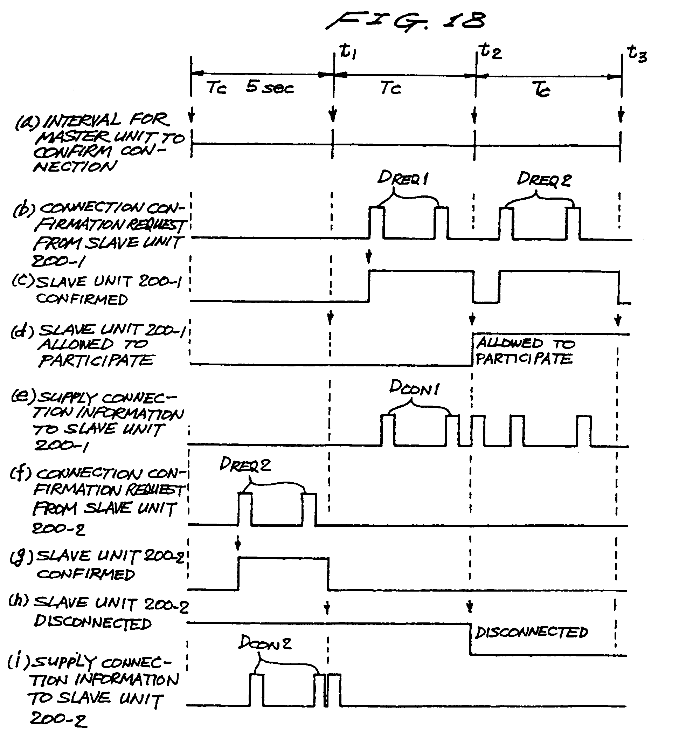

FIG. 18 shows a procedure by which the connection status of slave units is confirmed. In the communication sequence SEQ₂, the master unit 200 detects, at each periodic interval of time T_{C} (e.g., 5 seconds), as shown at (a) in FIG. 18, whether connection confirmation request information D_{REQ1} is reported from the slave units 200₋₁ ∼ 200₋ₙ, as shown at (b) in FIG. 18. If the master unit 200 is accessed by the slave unit 200₋₁ with connection confirmation request information DREQ₁ within an interval of time T_{C}, then the master unit 200 confirms the connection of the slave unit 200₋₁, as shown at (c) in FIG. 18. If the slave unit 200₋₁ is a newly connected slave unit, then the master unit 200 confirms the participation of the slave unit 200₋₁ in the audiovisual system and registers the slave unit 200₋₁ at a time t₂, as shown at (d) in FIG. 18. Then the master unit 200 confirms the connection of the slave unit 200₋₁ with system connection information D_{CON1} relative to the other slave units that are connected to the communication bus 14, as shown at (e) in FIG. 18.

In the interval preceding a time t₁, the master unit 200 is accessed by the slave unit 200₋₂ with connection confirmation request information D_{REQ2}, as shown at (f) in FIG. 18. The master unit 200 confirms the connection of the slave unit 200₋₂, as shown at (g) in FIG. 18. However, the master unit 200 is not accessed by the slave unit 200₋₂ with connection confirmation request information D_{REQ2} in the interval between the times t₁ and t₂, as shown at (f) in FIG. 18. Therefore, the master unit 200 regards the slave unit 200₋₂ as being disconnected from the audiovisual system at the time t₂, as shown at (h) in FIG. 18. When the connection of the slave unit 200₋₂ is confirmed, the master unit 200 transmits system connection information D_{CON2} to the slave unit 200₋₂, as shown at (i) in FIG. 18.

Since the master unit 200 periodically confirms connections of the slave units 200₋₁ ∼ 200₋ₙ at periodic intervals of time T_{C} during normal operation of the audiovisual system, the master unit 200 is able to recognize any disconnection or participation of the slave units 200₋₁ ∼ 200₋ₙ.

As described above, each interval of time T_{C} needed for the master unit 200 to confirm connection confirmation request information is typically set to 5 seconds. The master unit 200 receives and confirm connection confirmation request information from the slave units 200₋₁ ∼ 200₋ₙ in the intervals of time T_{C}. Each of the slave units 200₋₁ ∼ 200₋ₙ transmits connection confirmation request information at each interval of time which is typically set to 2 seconds. Consequently, the interval of time T_{C} in which the master unit 200 confirms connection confirmation request information is more than twice the interval of time in which each of the slave units 200₋₁ ∼ 200₋ₙ transmits connection confirmation request information. Even though connection confirmation request information is transmitted by the slave units 200₋₁ ∼ 200₋ₙ in different time slots or intervals, it can reliably be confirmed within any of the intervals of time T_{C}. It is not necessary to establish time intervals for confirmation in timed relation to those for transmission from the slave units 200₋₁ ∼ 200₋ₙ, as is the case with the conventional arrangement. Thus, a timer is only required to be set to one interval of time, and the storage area of a RAM for the timer can effectively be utilized.

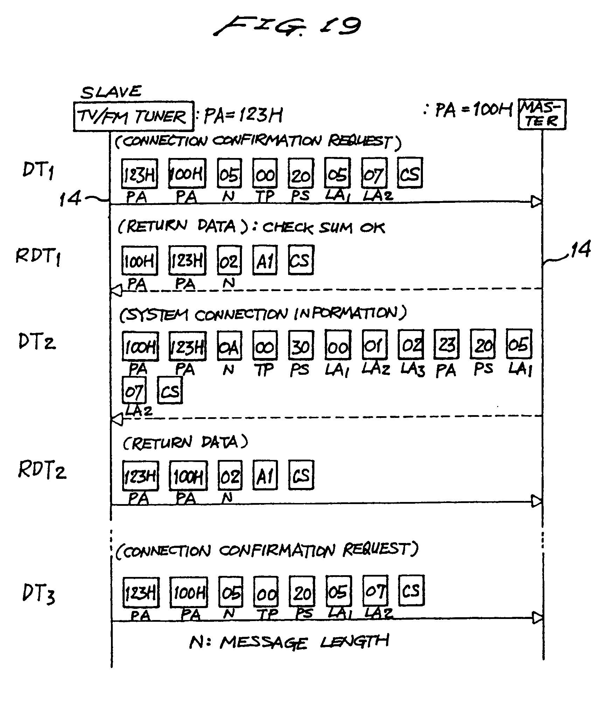

FIG. 19 shows a specific communication process or sequence for confirming a connection when the master unit is accessed by a slave unit including TV and FM/AM tuners to confirm the connection of the slave unit to the audiovisual system.

First, the slave unit transmits communication data DT₁ for requesting the confirmation of a connection by way of a self report, to the master unit through the communication bus 14. At this time, the communication data DT₁ includes its own physical address data PA indicated by "123H" ("H" means the hexadecimal notation), physical address data PA of the master unit, indicated by "100H", logical address data LA₁ = 05 and logical address data LA₂ = 07, which indicate that the slave unit transmitting the communication data includes the TV and FM/AM tuners (see FIG. 13). When the communication data DT₁ is received, the master unit 200 registers, based on the physical address data PA = 123H, the fact that the components with the functions indicated by LA₁ = 05, LA₂ = 07 are connected to the communication bus 14. These components will hereinafter be handled as audiovisual system members. In response to the received communication data DT₁, the master unit transmits return data RDT₁ back to the slave unit, indicating that the master unit has received the communication data DT₁. Then, in order to let the newly connected slave unit know the members or components of the audiovisual system, the master unit transmits system connection information DT₂ to the slave unit. When the system connection information DT₂ is received, the slave unit transmits return data RDT₂ back to the master unit to confirm the reception of the system connection information DT₂. After elapse of a predetermined period of time, the slave unit transmits communication data DT₃ concerning a request for confirming a connection (self report) again to the master unit. The communication data DT₃ is transmitted again because the connection must be confirmed periodically since the audiovisual system on the automobile is turned on and off depending on the ACC switch.

As described above, the communication data DT includes the physical address data PA and the logical address data LA, and the physical address data PA and the logical address data LA are independent of each other. Therefore, any desired combination of physical and logical address data PA, LA may be employed to transmit communication data to any desired unit.

While communication between slave and master units has been described above, it is also possible to transmit communication data between slave units.

As described above, the format of the communication data DT and the allotment of addresses to the units are different between the physical address data PA and the logical address data LA. As a consequence, even if physical address data PA is unknown, a new unit can be connected and can communicate with existing units provided logical address data LA are clearly established.

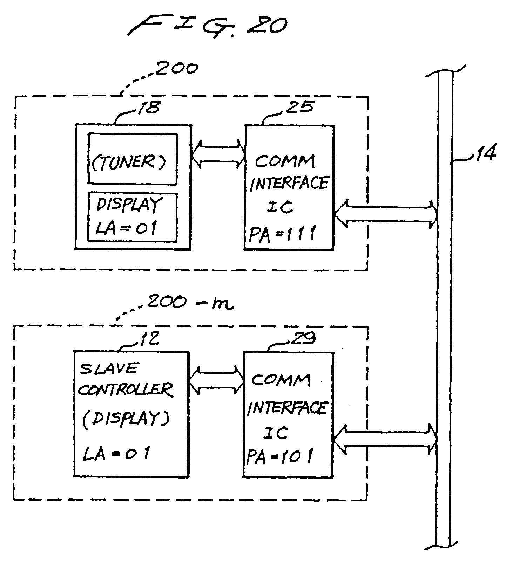

More specifically, as shown in FIG. 20, it is assumed that a new slave unit 200₋ₘ is connected to the communication bus 14. Even if the physical address data PA of the slave unit 200₋ₘ is "101" which is not assumed, provided the function of the slave unit is a display function, the same function registered in the master unit 200 exists as logical address data LA = 01, and hence the logical address data LA can be accessed. Therefore, it is possible to connect the slave unit 200₋ₘ to the master unit 200. The capability of the audiovisual system to expand itself is thus increased.

Although certain preferred embodiments of the present invention have been shown and described in detail, it should be understood that various changes and modifications may be made therein without departing from the scope of the appended claims.

## Claims

1. A method of data communication in a communication network on an automobile, said communication network including a master unit (M,200) and a plurality of slave units (S,200₋₁-200₋ₙ) which are connected to a common communication bus (B,14), said master unit issuing connection status information to one slave unit about other slave units connected to the communication bus;
characterised in that
connection confirmation request information is first sent to said master unit (M,200) from one of said slave units (S,200₋₁-200₋ₙ); and
thereafter, said master unit issues connection status information to said one slave unit about the other slave units connected to the communication bus.

2. A method according to claim 1, characterised in that said master unit (M,200) periodically detects whether connection confirmation request information has been transmitted from the slave units (S,200₋₁-200₋ₙ), thereby to confirm the connection status of the slave units at each of predetermined intervals of time while the communication network is being energized.

3. A method according to claim 2, characterised in that said master unit (M,200) regards as being disconnected a slave unit (S,200₋₁-200₋ₙ) having sent no connection request information, and allows a slave unit having newly sent connection confirmation request information to participate in the communication network.

4. A method according to any of claims 1 to 3, characterised in that where a slave unit (S,200₋₁-200₋ₙ) sends connection confirmation request information to said master unit (M,200) and no response is obtained from said master unit, the slave unit is placed into a lower power consumption mode and is periodically recovered therefrom to a normal power mode and again sends connection confirmation request information.

5. A method according to claim 2, characterised in that each of said predetermined intervals of time is at least twice the interval of time at which the connection confirmation request information is transmitted from the slave units (S,200₋₁-200₋ₙ).

6. A system for data communication in a communication network on an automobile, comprising:
a common communication bus (B,14) for communicating information;
a master unit (M,200) connected to said common communication bus; and
a plurality of slave units (S,200₋₁-200₋ₙ) connected to said common communication bus, characterised in that
said slave units (S,200₋₁-200₋ₙ) each include means for first sending connection confirmation request information to said master unit;
said master unit (M,200) has means for receiving connection confirmation request information from one of the slave units to establish communication between said one slave unit and said master unit, and means for issuing to said one slave unit, in response thereto, connection status information about the other slave units connected to the communication bus.

7. A system according to claim 6, characterised in that said communication bus (B,14) comprises a twisted pair of conductors.

8. A system according to claim 6 or claim 7, characterised in that each of said master and slave units comprises a master (18) or slave (19,24) controller and a communication interface (25,26,31) including a communication control IC (33,36) and a communication driver/receiver (32,35) formed separately from each other.

9. A system according to claim 8, wherein characterised in that said communication control IC (33,36) comprises a CMOS transistor and said communication driver/receiver (32,35) comprises a bipolar transistor of high current-driven capability.

10. A system according to claim 6, characterised in that said communication bus (B,14) comprises an optical communication cable (40), and each of said master and slave units comprises a master (18) or slave (19) controller and a communication interface including a communication control IC (33,36) and an electro-optical transducer (38,39) formed separately from each other.

11. A system according to any of claims 6 to 10, characterised in that said connection confirmation request information comprises a physical address (PA) of one of the slave units, a physical address (PA) of the master unit, at least one logical address (LA) indicating a function with which the slave unit is provided, connection confirmation data (TP,N) and check sum data (CS), and said connection status information comprises a physical address (PA) of the master unit (M,200), a physical address (PA) of the slave unit having sent connection request information to the master unit, data concerning members or components of the communication network, and check sum data (CS).

## Patentansprüche

1. Verfahren zur Datenübertragung in einem Übertragungsnetz bei einem Kraftfahrzeug, welches Übertragungsnetz enthält eine Haupteinheit (M,200) und eine Vielzahl von Nebeneinheiten (S,200₋₁ - 200₋ₙ), die an einem gemeinsamen Übertragungsbus (B,14) angeschlossen sind, wobei die Haupteinheit Verbindungsstatus-Information über andere an dem Übertragungsbus angeschlossene Nebeneinheiten an eine Nebeneinheit ausgibt;
**dadurch gekennzeichnet,**
daß Verbindungsbestätigungs-Anforderungsinformation zuerst von einer der Nebeneinheiten (S,200₋₁ - 200₋ₙ) zu der Haupteinheit (M,200) gesendet wird und
daß danach die Haupteinheit Verbindungsstatus-Information über die an dem Übertragungsbus angeschlossenen anderen Nebeneinheiten an die eine Nebeneinheit ausgibt.

2. Verfahren nach Anspruch 1, **dadurch gekennzeichnet**, daß die Haupteinheit (M,200) periodisch erfaßt, ob Verbindungsbestätigungs-Anforderungsinformation von den Nebeneinheiten (S,200₋₁ - 200₋ₙ) gesendet wurde, um dadurch den Verbindungsstatus der Nebeneinheiten an jedem vorgegebenen Zeitintervall zu bestätigen, wahrend das Übertragungsnetz mit Strom beaufschlagt ist.

3. Verfahren nach Anspruch 2, **dadurch gekennzeichnet**, daß die Haupteinheit (M,200) eine Nebeneinheit (S,200₋₁ - 200₋ₙ), die keine Verbindungsanforderungs-Information gesendet hat, als abgetrennt betrachtet, und daß sie einer Nebeneinheit, die neuerdings eine Verbindungsbestätigungs-Anforderungsinformation gesendet hat, gestattet, an dem Übertragungsnetz teilzunehmen.

4. Verfahren nach einem der Ansprüche 1 bis 3, **dadurch gekennzeichnet**, daß dann, wenn eine Nebeneinheit (S,200₋₁ - 200₋ₙ) Verbindungsbestätigungs-Anforderungsinformation an die Haupteinheit (M,200) sendet und keine Reaktion von der Haupteinheit erhalten wird, die Nebeneinheit in einen Modus mit niedrigerem Leistungsverbrauch versetzt und periodisch aus diesem zu einem Normalleistungs-Modus erweckt wird und wieder Verbindungsbestatigungs-Anforderungsinformation sendet.

5. Verfahren nach Anspruch 2, **dadurch gekennzeichnet**, daß jeder vorgegebene Zeitintervall mindestens das Zweifache des Zeitintervalls ist, mit dem die Verbindungsbestatigungs-Anforderungsinformation von den Nebeneinheiten (S, 200₋₁ - 200₋ₙ) gesendet wird.

6. System zur Datenübertragung in einem Übertragungsnetz an einem Kraftfahrzeug, welches umfaßt:
einen gemeinsamen Übertragungsbus (B,14) zur Informations-Übertragung;
eine an dem gemeinsamen Übertragungsbus angeschlossene Haupteinheit (M, 200); und
eine Vielzahl von an dem gemeinsamen Übertragungsbus angeschlossenen Nebeneinheiten (S,200₋₁ - 200₋ₙ), **dadurch gekennzeichnet**,
daß die Nebeneinheiten (S,200₋₁ - 200₋ₙ) jeweils Mittel enthalten, um zuerst Verbindungsbestätigungs-Anforderungsinformation zu der Haupteinheit zu senden;
daß die Haupteinheit (M,200) Mittel zum Empfangen von Verbindungsbestätigungs-Anforderungsinformation von einer der Nebeneinheiten besitzt, um eine Übertragung zwischen der einen Nebeneinheit und der Haupteinheit einzurichten, und Mittel, um in Reaktion darauf an die eine Nebeneinheit Verbindungsstatus-Information über die anderen an dem Übertragungsbus angeschlossenen Nebeneinheiten auszugeben.

7. System nach Anspruch 6, **dadurch gekennzeichnet**, daß der Übertragungsbus (B,14) ein verdrilltes Leiterpaar umfaßt.

8. System nach Anspruch 6 oder 7, **dadurch gekennzeichnet**, daß jede Haupteinheit oder Nebeneinheit eine Haupt-(18) oder Neben-(19, 24) Steuerung und eine Übertragungs-Schnittstelle (25, 26, 31) umfaßt, die einen Übertragungssteuer-IC (33, 36) und einen Verbindungs-Ansteuerer/Empfänger (32, 35) umfaßt, welche getrennt voneinander ausgebildet sind.

9. System nach Anspruch 8, **dadurch gekennzeichnet**, daß der Verbindungssteuer-IC 133, 36) einen CMOS-Transistor umfaßt und daß der Übertragungs-Ansteuerer/Empfänger (32, 35) einen bipolaren Transistor mit hoher Stromansteuer-Kapazität umfaßt.

10. System nach Anspruch 6, **dadurch gekennzeichnet**, daß der Übertragungsbus (B,14) ein optisches Übertragungskabel (40) umfaßt, und daß jede Haupt- und Nebeneinheit eine Haupt-(18) bzw. Neben-(19) Steuerung enthält und eine Übertragungs-Schnittstelle, die einen Übertragungssteuer-IC (33, 36) und einen elektrooptischen Wandler (38, 39) enthält, die getrennt voneinander ausgebildet sind.

11. System nach einem der Ansprüche 6 bis 10, **dadurch gekennzeichnet**, daß die Verbindungsbestätigungs-Anforderungsinformation umfaßt eine physikalische Adresse (PA) einer der Nebeneinheiten, eine physikalische Adresse (PA) der Haupteinheit, mindestens eine logische Adresse (LA), welche eine Funktion anzeigt, mit der die Nebeneinheit ausgestattet ist, Verbindungsbestätigungs-Daten (TP,N) und Prüfsummendaten (CS), und daß die Verbindungsstatus-Information umfaßt eine physikalische Adresse (PA) der Haupteinheit (M,200), eine physikalische Adresse (PA) der Nebeneinheit, welche die Verbindungs-Anforderungsinformation zu der Haupteinheit gesendet hat, Daten, welche die Mitglieder oder Komponenten des Übertragungsnetzes betreffen, und Prüfsummendaten (CS).

## Revendications

1. Procédé de communication de données dans un réseau de communication monté sur une automobile, ledit réseau de communication incluant une unité maître (M, 200) et une pluralité d'unités esclaves (S, 200₋₁-200₋ₙ) qui sont connectées à un bus de communication commun (B, 14), ladite unité maître délivrant une information de statut de connexion à une unité esclave concernant d'autres unités esclaves connectées au bus de communication, caractérisé en ce que :
une information de requête de confirmation de connexion est tout d'abord envoyée à ladite unité maître (M, 200) depuis l'une desdites unités esclaves (S, 200₋₁-200₋ₙ) ; et
ensuite, ladite unité maître délivre une information de statut de connexion à ladite une unité esclave concernant les autres unités esclaves connectées au bus de communication.

2. Procédé selon la revendication 1, caractérisé en ce que ladite unité maître (M, 200) détecte périodiquement si oui ou non une information de requête de confirmation de connexion a été transmise depuis les unités esclaves (S, 200₋₁-200₋ₙ) pour ainsi confirmer le statut de connexion des unités esclaves pour chacun d'intervalles temporels prédéterminés tandis que le réseau de communication est en train d'être activé.

3. Procédé selon la revendication 2, caractérisé en ce que ladite unité maître (M, 200) considère comme étant déconnectée une unité esclave (S, 200₋₁-200₋ₙ) qui n'a pas envoyé d'information de requête de connexion, et permet à une unité esclave qui a envoyé nouvellement une information de requête de confirmation de connexion de participer dans le réseau de communication.

4. Procédé selon l'une quelconque des revendications 1 à 3, caractérisé en ce que, lorsqu'une unité esclave (S, 200₋₁-200₋ₙ) envoie une information de requête de confirmation de connexion à ladite unité maître (M, 200) et qu'aucune réponse n'est obtenue depuis ladite unité maître, l'unité esclave est placée dans un mode consommation d'énergie plus faible et en est périodiquement ôtée pour être placée dans un mode consommation d'énergie normale et elle envoie à nouveau une information de requête de confirmation de connexion.

5. Procédé selon la revendication 2, caractérisé en ce que chacun desdits intervalles temporels prédéterminés vaut au moins deux fois l'intervalle temporel pour lequel l'information de requête de confirmation de connexion est transmise depuis les unités esclaves (S, 200₋₁-200₋ₙ).

6. Système pour une communication de données dans un réseau de communication monté sur une automobile, comprenant :
un bus de communication commun (B, 14) pour communiquer une information ;
une unité maître (M, 200) connectée audit bus de communication commun ; et
une pluralité d'unités esclaves (S, 200₋₁-200₋ₙ) connectées audit bus de communication commun,
caractérisé en ce que :
lesdites unités esclaves (S, 200₋₁-200₋ₙ) incluent chacune un moyen pour envoyer tout d'abord une information de requête de confirmation de connexion à ladite unité maître ;
ladite unité maître (M, 200) comporte un moyen pour recevoir une information de requête de confirmation de connexion provenant de l'une des unités esclaves afin d'établir une communication entre ladite une unité esclave et ladite unité maître, et un moyen pour délivrer à ladite une unité esclave, en réponse, une information de statut de connexion concernant les autres unités esclaves connectées au bus de communication.

7. Système selon la revendication 6, caractérisé en ce que ledit bus de communication (B, 14) comprend une paire torsadée de conducteurs.

8. Système selon la revendication 6 ou 7, caractérisé en ce que chacune desdites unités maître et esclaves comprend un contrôleur de maître (18) ou d'esclave (19, 24) et un interface de communication (25, 26, 31) incluant un circuit intégré IC de commande de communication (33, 36) et un dispositif de commande/récepteur de communication (32, 35) formés séparément l'un de l'autre.

9. Système selon la revendication 8, caractérisé en ce que ledit IC de commande de communication (33, 36) comprend un transistor CMOS et ledit dispositif de commande/récepteur de communication (32, 35) comprend un transistor bipolaire présentant une capacité de commande de courant élevée.

10. Système selon la revendication 6, caractérisé en ce que ledit bus de communication (B, 14) comprend un câble de communication optique (40), et chacune desdites unités maître et esclaves comprend un contrôleur de maître (18) ou d'esclave (19) et un interface de communication incluant un IC de commande de communication (33, 36) et un transducteur électro-optique (38, 39) formés séparément l'un de l'autre.

11. Système selon l'une quelconque des revendications 6 à 10, caractérisé en ce que ladite information de requête de confirmation de connexion comprend une adresse physique (PA) de l'une des unités esclaves, une adresse physique (PA) de l'unité maître, au moins une adresse logique (LA) indiquant une fonction dont l'unité esclave est pourvue, des données de confirmation de connexion (TP, N) et des données de somme de contrôle (CS), et ladite information de statut de connexion comprend une adresse physique (PA) de l'unité maître (M, 200), une adresse physique (PA) de l'unité esclave ayant envoyé une information de requête de connexion à l'unité maître, des données concernant des éléments ou composants du réseau de communication et des données de somme de contrôle (CS).
